# EUROPEAN PATENT SPECIFICATION

(11) **EP 3 440 612 B1**
(45) Date of publication and mention of the grant of the patent: **15.02.2023**
(21) Application number: 17803476.5
(22) Date of filing: 24.05.2017
(51) Int. Cl.: G06Q 30/02, G06Q 20/32, G06Q 20/20, G06Q 20/38

(54) **POINT-OF-SALE PROCESSING OF MOBILE MANUFACTURER BARCODE**
VERKAUFSORTVERARBEITUNG VON MOBILEM HERSTELLERSTRICHCODE
TRAITEMENT DE POINT DE VENTE DE CODE BARRES DE FABRICANT MOBILE

(30) Priority: 24.05.2016 US 201662341036 P
(43) Date of publication of application: 13.02.2019
(73) Proprietor: Samsung Electronics Co., Ltd., Gyeonggi-do 16677 (KR)
(72) Inventor: RAJU, Venkatesh, Palo Alto California 94306 (US)
(74) Representative: HGF
(86) International application number: PCT/US2017/034145
(87) International publication number: WO 2017/205453

(56) References cited:
- WO-A1-2013/086245
- WO-A2-2015/008156
- US-A1- 2012 067 944
- US-A1- 2012 284 107
- US-A1- 2012 316 948
- US-A1- 2014 117 075
- US-A1- 2015 066 670
- US-B1- 9 147 097
- US-B2- 6 685 093

## Description

### TECHNICAL FIELD

The present disclosure relates to the field of electronic barcode processing.

### BACKGROUND

It is known to process promotional coupons in connection with point of sale transactions. The present disclosure relates to limitations in the field of electronic barcode processing, such as for electronic point-of-sale transactions. More particularly, there are known limitations relating to electronic point-of-sale acknowledgement of redemption of mobile manufacturer coupons.

### SUMMARY

The present disclosure provides a system for and method of point-of-sale (POS) bar code processing acknowledgement of electronic mobile manufacturer coupon redemption. In accordance with an embodiment of the present disclosure, a method of processing an electronic mobile manufacturer coupon is provided. A barcode of a mobile manufacturer coupon is received at an electronic point-of-sale system from a mobile electronic device. A determination of whether redemption criterion for the coupon is satisfied is made at the electronic point-of-sale system. An acknowledgement, such as an audio acknowledgement signal, is emitted from the electronic point-of-sale system if the redemption criterion is satisfied, the audio acknowledgement signal being received and interpreted by the mobile electronic device. These and other aspects of the present disclosure are described herein. The appended independent claims define the scope of protection.

Patent applications WO 2013/086245 A1, US 2012/0067944 A1, and WO 2015/008156 A3 discloses point-of-sale systems that process coupons presented by mobile devices.

### BRIEF DESCRIPTION OF THE DRAWINGS

The present disclosure is described with respect to particular exemplary embodiments thereof and reference is accordingly made to the drawings in which:
Figure 1 illustrates an example of a paper manufacturer coupon;
Figure 2 illustrates an example of a mobile manufacturer coupon for use in connection with embodiments of the present disclosure; and
Figure 3 illustrates a system for point-of-sale acknowledgement of mobile manufacturer coupon redemption in accordance with an embodiment of the present disclosure.

### DETAILED DESCRIPTION

Mobile manufacturer coupons (MMC) are a form of promotional coupons for mobile devices issued by manufacturers and their affiliates. They are essentially equivalent to paper-based manufacturer coupons, with the exception that they are not printed on paper but distributed electronically to shoppers via websites, mobile apps or social media. A mobile manufacturer coupon can be received and stored by mobile electronic devices, such as smart phones and tablet computers, using an appropriate mobile software application program. Mobile manufacturer coupons can also be displayed and redeemed by mobile electronic devices. Like conventional paper-based coupons, mobile manufacturer coupons generally have an associated barcode that serves to identify the particular coupon or promotion represented by the coupon.

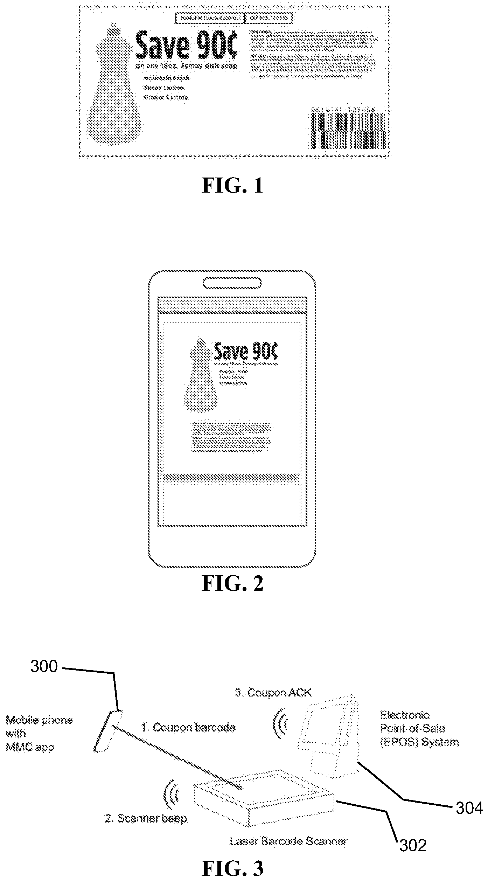

The paper coupon shown in Fig. 1 in MMC form may be distributed via a mobile application and displayed by a mobile device as shown in Figure 2.

Redeeming a mobile manufacturer coupon at a retail checkout point-of-sale (POS) is much like redeeming a paper coupon. The shopper or clerk scans the barcode of a displayed coupon at the point-of-sale scanner. In some markets, such as the United States, digital coupon standards prohibit the display of the barcode on the screen. However, the barcode may alternatively be transmitted by the shopper's mobile device to the POS scanner using, for example, beaming technology (also referred to as pulsed light simulated barcode) such as described in U.S. patent 6,685,093.

The use of mobile manufacturer coupons has significant advantages to both the consumer and the issuing manufacturer. For the consumer, it eliminates the need to cut out the coupons from a newspaper or other coupon booklet, and for the issuer, it can provide a direct relationship with the consumers as the mobile coupons can be tracked to individual users via the mobile device. This direct relationship enables the manufacturer to better anticipate the needs of the individual shopper and offer more relevant coupons than would be otherwise possible.

An important aspect of establishing or maintaining the consumer relationship is for the manufacturer to know when a coupon is successfully redeemed. This is referred to closing the loop at the point-of-sale.

Redemption of mobile manufacturer coupons can be identified and tracked by correlating a redemption record for the transaction from a retailer's point-of-sale system with the mobile device's redemption record for the coupon. This can involve having all involved retailer locations periodically transmit their coupon redemption records to a centralized clearing house, e.g. nightly, and the clearing house sending the combined redemption records to another party (e.g. a mobile app provider) for correlation with the mobile device redemption records. Disadvantages of this approach include the periodic transmission required from each retailer location, as well as a delay in determining coupon redemption.

The present disclosure is directed toward providing an improved solution for identifying and tracking redemption of mobile manufacturer coupons.

In accordance with an embodiment of the present disclosure, an audio-based acknowledgement of successful coupon redemption by a POS is received by a mobile phone application. In accordance with a further embodiment, an audio-based indication of attempted, but failed, coupon redemptions by a POS is received by a mobile phone application.

The present disclosure provides a real-time acknowledgement of the coupon redemption by the electronic point-of-sale system directly back to the shopper's mobile phone using an audio acknowledgement message. An embodiment of a system for such coupon redemption acknowledgement is shown in Fig. 3.

As shown in Fig. 3, a shopper can redeem a mobile coupon on a mobile device 300 at a point-of-sale by initiating transmission of the coupon's barcode (1). This can be via pulsed light beaming to a barcode scanner 302 of an electronic point-of-sale (EPOS) system 304. The barcode scanner can then optionally emit a beep (2) or other sound upon successful decode of the barcode. This optional beep or sound is a human-perceptible audio signal that indicates the barcode scan was successful.

The EPOS system 304 then validates the coupon and determines if the criteria for the coupon are met. Such criteria can include, for example, the EPOS system 304 determining that the coupon is for an item of merchandise or a service presently being purchased by the shopper and that the coupon is currently valid (e.g., the coupon or promotion has not yet expired).

If the transaction meets all the criteria, the EPOS transmits an audio acknowledgement signal (3). This audio acknowledgement signal is received via a microphone of the mobile device 300 and is decoded by a mobile device application program. The invention defines that the audio acknowledgement signal comprises emitted sound waves having characteristics expected by the mobile phone application to indicate successful redemption of the coupon. For example, the emitted audio signal can include a predetermined tone or sequence of tones, which may or may not be human perceptible. The emitted audio signal is preferably distinguishable from expected normal background sound and from the optional beep emitted to indicate a successful barcode scan.

If the coupon is rejected, e.g., because one or more criteria are not satisfied for redemption, the EPOS system 304 transmits an audio negative acknowledgement. This non-acknowledgment signal informs the mobile phone application that the coupon was rejected. The audio non-acknowledgment signal comprises emitted sound waves having characteristics expected by the mobile phone application to indicate a failed attempt at redemption of the coupon. For example, the emitted audio signal can include a predetermined tone or sequence of tones, which may or may not be human perceptible. This emitted audio signal is preferably distinguishable from expected normal background sound and from the optional beep emitted to indicate a successful barcode scan.

In an embodiment, the customer is informed by the EPOS system 304 or the mobile device 300 as to whether the coupon is accepted. If the coupon is accepted, this indicates that the transaction was completed, or will be completed, with the coupon or promotion being incorporated into the transaction. Otherwise, if the coupon is not accepted, the shopper can decide whether to attempt to redeem a different coupon or to discontinue the transaction with respect to the affected merchandise or service.

After the mobile device 300 receives the audio acknowledgement or non-acknowledgement, the mobile application can transmit this redemption information to the manufacturer or to a centralized processing facility, e.g., by wireless telephone communication, text message, etc., for further processing by the manufacturer or on behalf of the manufacturer or its affiliates. This transmission of the redemption information can be contemporaneous with the transaction (i.e. in "real-time") or it can take place a later time, e.g., in batches of transaction data.

According to embodiments of the present disclosure, the use of an audio message from the EPOS back to the phone functions to "close the loop." Mobile devices, such as smart phones and tablets, are generally configurable to listen and process audio received via the built-in microphone, therefore the audio message reception aspect of this disclosure is readily implemented on the mobile device. A significant portion of existing EPOS systems are based on PC platforms and most have built-in speakers. The audio message transmission aspect is therefore also readily implementable and in most cases requires no additional hardware.

The foregoing detailed description of the present disclosure is provided for the purposes of illustration and is not intended to be exhaustive or to limit the disclosure to the embodiments disclosed. Accordingly, the scope of the present disclosure is defined by the appended claims.

## Claims

1. A method of processing a mobile manufacturer coupon comprising steps of:
receiving from a mobile electronic device (300) a barcode of a mobile manufacturer coupon at an electronic point-of-sale system (304);
determining at the electronic point-of-sale system whether redemption criterion for the coupon is satisfied;
emitting an audio acknowledgement signal from the electronic point-of-sale system if the redemption criterion is satisfied, the audio acknowledgement signal comprising a sound wave having a characteristic expected by the mobile electronic device to indicate successful redemption of the coupon and being received and interpreted by the mobile electronic device; and
emitting an audio non-acknowledgement signal from the electronic point-of-sale system if the redemption criterion is not satisfied, the audio non-acknowledgement signal being received and interpreted by the mobile electronic device.

2. The method according to claim 1 , wherein the barcode is received at the electronic point-of-sale system by the mobile electronic device emitting a pulsed light simulated barcode.

3. The method according to claim 1, wherein the redemption criterion includes purchase of merchandise or service corresponding to the coupon and the coupon being valid.

4. A method of processing a mobile manufacturer coupon comprising steps of:
transmitting from a mobile electronic device (300) a barcode of a mobile manufacturer coupon at an electronic point-of-sale system (304);
receiving, at the mobile electronic device, an audio acknowledgement signal from the electronic point-of-sale system if coupon redemption criterion is satisfied, the audio acknowledgement signal comprising a sound wave having a characteristic expected by the mobile electronic device to indicate successful redemption of the coupon, and being received and interpreted by the mobile electronic device; and
receiving, at the mobile electronic device, an audio non-acknowledgement signal from the electronic point-of-sale system if the coupon redemption criterion is not satisfied, the audio non-acknowledgement signal being received and interpreted by the mobile electronic device.

5. The method according to claim 4, wherein the barcode is transmitted to the electronic point-of-sale system by the mobile electronic device emitting a pulsed light simulated barcode.

6. The method according to claim 4, wherein the redemption criterion includes purchase of merchandise or service corresponding to the coupon and the coupon being valid.

7. The method according to claim 4, wherein the audio non-acknowledgement signal is distinguished by the mobile electronic device from the audio acknowledgement signal.

8. A mobile electronic device (300), comprising:
a transmitter transmitting from the mobile electronic device a barcode of a mobile manufacturer coupon at an electronic point-of-sale system to process the mobile manufacturer coupon;
a built-in speaker receiving, at the mobile electronic device, an audio acknowledgement signal from the electronic point-of-sale system if coupon redemption criterion is satisfied, the audio acknowledgement signal comprising a sound wave having a characteristic expected by the mobile electronic device to indicate successful redemption of the coupon, and being received and interpreted by the mobile electronic device; and
the built-in speaker receiving, at the mobile electronic device, an audio non-acknowledgement signal from the electronic point-of-sale system if the coupon redemption criterion is not satisfied, the audio non-acknowledgement signal being received and interpreted by the mobile electronic device.

9. The mobile electronic device according to claim 8, wherein the barcode is transmitted to the electronic point-of-sale system by the mobile electronic device emitting a pulsed light simulated barcode.

10. The mobile electronic device according to claim 8, wherein the redemption criterion includes purchase of merchandise or service corresponding to the coupon and the coupon being valid.

11. The mobile electronic device according to claim 8, wherein the audio non-acknowledgement signal is distinguished by the mobile electronic device from the audio acknowledgement signal.

12. The mobile electronic device according to claim 8, further comprising a wireless transmitter transmitting redemption information to a manufacturer centralized processing facility.

13. The mobile electronic device according to claim 12, wherein transmitting redemption information to the manufacturer centralized processing is done on a real-time basis.

14. The mobile electronic device according to claim 12, wherein transmitting redemption information to the manufacturer centralized processing is done on a batch basis.

## Patentansprüche

1. Verfahren zum Verarbeiten eines Gutscheins eines Mobiltelefonherstellers, umfassend die Schritte:
Empfangen von einer mobilen elektronischen Vorrichtung (300) eines Strichcodes eines Gutscheins eines Mobiltelefonherstellers an einem elektronischen Verkaufsortsystem (304);
Bestimmen an dem elektronischen Verkaufsortsystem, ob das Einlösekriterium für den Gutschein erfüllt ist;
Aussenden eines Audio-Bestätigungssignals von dem elektronischen Verkaufsortsystem, wenn das Einlösekriterium erfüllt ist, wobei das Audio-Bestätigungssignal eine Schallwelle umfasst, die eine Charakteristik aufweist, die von der mobilen elektronischen Vorrichtung erwartet wird, um eine erfolgreiche Einlösung des Gutscheins anzugeben, und durch die mobile elektronische Vorrichtung empfangen und interpretiert wird; und
Aussenden eines Audio-Nichtbestätigungssignals von dem elektronischen Verkaufsortsystem, wenn das Einlösekriterium nicht erfüllt ist, wobei das Audio-Nichtbestätigungssignal von der mobilen elektronischen Vorrichtung empfangen und interpretiert wird.

2. Verfahren nach Anspruch 1, wobei der Strichcode an dem elektronischen Verkaufsortsystem empfangen wird, indem die mobile elektronische Vorrichtung einen durch gepulstes Licht simulierten Strichcode aussendet.

3. Verfahren nach Anspruch 1, wobei das Einlösekriterium den Kauf von Waren oder Dienstleistungen entsprechend dem Gutschein und die Gültigkeit des Gutscheins enthält.

4. Verfahren zum Verarbeiten eines Gutscheins eines Mobiltelefonherstellers, umfassend die Schritte:
Übertragen von einer mobilen elektronischen Vorrichtung (300) eines Strichcodes eines Gutscheins eines Mobiltelefonherstellers an einem elektronischen Verkaufsortsystem (304);
Empfangen, an der mobilen elektronischen Vorrichtung, eines Audio-Bestätigungssignals von dem elektronischen Verkaufsortsystem, wenn das Gutscheineinlösekriterium erfüllt ist, wobei das Audio-Bestätigungssignal eine Schallwelle umfasst, die eine Charakteristik aufweist, die von der mobilen elektronischen Vorrichtung erwartet wird, um eine erfolgreiche Einlösung des Gutscheins anzugeben, und durch die mobile elektronische Vorrichtung empfangen und interpretiert wird; und
Empfangen, an der mobilen elektronischen Vorrichtung, eines Audio-Nichtbestätigungssignals von dem elektronischen Verkaufsortsystem, wenn das Gutscheineinlösekriterium nicht erfüllt ist, wobei das Audio-Nichtbestätigungssignal von der mobilen elektronischen Vorrichtung empfangen und interpretiert wird.

5. Verfahren nach Anspruch 4, wobei der Strichcode an das elektronische Verkaufsortsystem übertragen wird, indem die mobile elektronische Vorrichtung einen durch gepulstes Licht simulierten Strichcode aussendet.

6. Verfahren nach Anspruch 4, wobei das Einlösekriterium den Kauf von Waren oder Dienstleistungen entsprechend dem Gutschein und die Gültigkeit des Gutscheins enthält.

7. Verfahren nach Anspruch 4, wobei das Audio-Nichtbestätigungssignal durch die mobile elektronische Vorrichtung von dem Audio-Bestätigungssignal unterschieden wird.

8. Mobile elektronische Vorrichtung (300), umfassend:
einen Sender, der von einer mobilen elektronischen Vorrichtung einen Strichcode eines Gutscheins eines Mobiltelefonherstellers an einem elektronischen Verkaufsortsystem überträgt, um den Gutschein des Mobiltelefonherstellers zu verarbeiten;
einen eingebauten Lautsprecher, der an der mobilen elektronischen Vorrichtung ein Audio-Bestätigungssignals von dem elektronischen Verkaufsortsystem empfängt, wenn das Gutscheineinlösekriterium erfüllt ist, wobei das Audio-Bestätigungssignal eine Schallwelle umfasst, die eine Charakteristik aufweist, die von der mobilen elektronischen Vorrichtung erwartet wird, um eine erfolgreiche Einlösung des Gutscheins anzugeben, und durch die mobile elektronische Vorrichtung empfangen und interpretiert wird; und
wobei der eingebaute Lautsprecher an der mobilen elektronischen Vorrichtung ein Audio-Nichtbestätigungssignal von dem elektronischen Verkaufsortsystem empfängt, wenn das Gutscheineinlösekriterium nicht erfüllt ist, wobei das Audio-Nichtbestätigungssignal von der mobilen elektronischen Vorrichtung empfangen und interpretiert wird.

9. Mobile elektronische Vorrichtung nach Anspruch 8, wobei der Strichcode an das elektronische Verkaufsortsystem übertragen wird, indem die mobile elektronische Vorrichtung einen durch gepulstes Licht simulierten Strichcode aussendet.

10. Mobile elektronische Vorrichtung nach Anspruch 8, wobei das Einlösekriterium den Kauf von Waren oder Dienstleistungen entsprechend dem Gutschein und die Gültigkeit des Gutscheins enthält.

11. Mobile elektronische Vorrichtung nach Anspruch 8, wobei das Audio-Nichtbestätigungssignal durch die mobile elektronische Vorrichtung von dem Audio-Bestätigungssignal unterschieden wird.

12. Mobile elektronische Vorrichtung nach Anspruch 8, ferner einen drahtlosen Sender umfassend, der Einlösungsinformationen an eine zentralisierte Verarbeitungseinrichtung des Herstellers überträgt.

13. Mobile elektronische Vorrichtung nach Anspruch 12, wobei das Übertragen von Einlösungsinformationen an die zentralisierte Verarbeitung des Herstellers auf Echtzeitbasis erfolgt.

14. Mobile elektronische Vorrichtung nach Anspruch 12, wobei das Übertragen von Einlösungsinformationen an die zentralisierte Verarbeitung des Herstellers chargenweise erfolgt.

## Revendications

1. Procédé de traitement d'un bon de réduction de marque mobile comprenant les étapes de :
réception depuis un dispositif électronique mobile (300) d'un code-barres d'un bon de réduction de marque mobile au niveau d'un système de point de vente électronique (304) ;
détermination au niveau du système de point de vente électronique si un critère de remboursement pour le bon de réduction est satisfait ;
émission d'un signal d'accusé de réception audio depuis le système de point de vente électronique si le critère de remboursement est satisfait, le signal d'accusé de réception audio comprenant une onde sonore ayant une caractéristique attendue par le dispositif électronique mobile pour indiquer la réussite du remboursement du bon de réduction et étant reçu et interprété par le dispositif électronique mobile ; et
émission d'un signal audio de non-accusé de réception depuis le système de point de vente électronique si le critère de remboursement n'est pas satisfait, le signal audio de non-accusé de réception étant reçu et interprété par le dispositif électronique mobile.

2. Procédé selon la revendication 1, dans lequel le code-barres est reçu au niveau du système de point de vente électronique par le dispositif électronique mobile émettant un code-barres simulé par lumière pulsée.

3. Procédé selon la revendication 1, dans lequel le critère de remboursement comprend l'achat d'une marchandise ou d'un service correspondant au bon de réduction et le bon de réduction étant valide.

4. Procédé de traitement d'un bon de réduction mobile comprenant les étapes de :
transmission depuis un dispositif électronique mobile (300) d'un code-barres d'un bon de réduction de marque mobile à un système de point de vente électronique (304) ;
réception, au niveau du dispositif électronique mobile, d'un signal d'accusé de réception audio depuis le système de point de vente électronique si un critère de remboursement du bon de réduction est satisfait, le signal d'accusé de réception audio comprenant une onde sonore ayant une caractéristique attendue par le dispositif électronique mobile pour indiquer la réussite du remboursement du bon de réduction, et étant reçu et interprété par le dispositif électronique mobile ; et
réception, au niveau du dispositif électronique mobile, d'un signal audio de non-accusé de réception depuis le système de point de vente électronique si le critère de remboursement du bon de réduction n'est pas satisfait, le signal audio de non-accusé de réception étant reçu et interprété par le dispositif électronique mobile.

5. Procédé selon la revendication 4, dans lequel le code-barres est transmis au système de point de vente électronique par le dispositif électronique mobile émettant un code-barres simulé par lumière pulsée.

6. Procédé selon la revendication 4, dans lequel le critère de remboursement comprend l'achat d'une marchandise ou d'un service correspondant au bon de réduction et le bon de réduction étant valide.

7. Procédé selon la revendication 4, dans lequel le signal audio de non-accusé de réception est distingué par le dispositif électronique mobile du signal audio d'accusé de réception.

8. Dispositif électronique portable (300) comprenant :
un émetteur transmettant depuis le dispositif électronique mobile un code-barres d'un bon de réduction de marque mobile au niveau d'un système de point de vente électronique pour traiter le bon de réduction mobile ;
un haut-parleur intégré recevant, au niveau du dispositif électronique mobile, un signal d'accusé de réception audio depuis le système de point de vente électronique si un critère de remboursement du bon de réduction est satisfait, le signal d'accusé de réception audio comprenant une onde sonore ayant une caractéristique attendue par le dispositif électronique mobile pour indiquer la réussite du remboursement du bon de réduction, et étant reçu et interprété par le dispositif électronique mobile ; et
le haut-parleur intégré recevant, au niveau du dispositif électronique mobile, un signal audio de non-accusé de réception depuis le système de point de vente électronique si le critère de remboursement du bon de réduction n'est pas satisfait, le signal audio de non-accusé de réception étant reçu et interprété par le dispositif électronique mobile.

9. Dispositif électronique mobile selon la revendication 8, dans lequel le code-barres est transmis au système de point de vente électronique par le dispositif électronique mobile émettant un code-barres simulé par lumière pulsée.

10. Dispositif électronique mobile selon la revendication 8, dans lequel le critère de remboursement comprend l'achat d'une marchandise ou d'un service correspondant au bon de réduction et le bon de réduction étant valide.

11. Dispositif électronique mobile selon la revendication 8, dans lequel le signal de non-accusé de réception audio est distingué par le dispositif électronique mobile du signal d'accusé de réception audio.

12. Dispositif électronique mobile selon la revendication 8, comprenant en outre un émetteur sans fil transmettant des informations de remboursement à un système de traitement centralisé de marque.

13. Dispositif électronique mobile selon la revendication 12, dans lequel la transmission des informations de remboursement au traitement centralisé de marques est effectuée sur une base en temps réel.

14. Dispositif électronique mobile selon la revendication 12, dans lequel la transmission des informations de remboursement au traitement centralisé de marques est effectuée sur une base par lots.
